# EUROPEAN PATENT SPECIFICATION

(11) **EP 3 097 446 B1**
(45) Date of publication and mention of the grant of the patent: **25.03.2020**
(21) Application number: 14715935.4
(22) Date of filing: 09.04.2014
(51) Int. Cl.: G02B 6/44, H01B 9/00

(54) **POWER CABLE FILLER DEVICE AND POWER CABLE COMPRISING THE SAME**
HAUPTSTROMLEITUNGSFÜLLER UND VERWANDTE HAUPTSTROMLEITUNG
FILLER DE CÂBLE DE PUISSANCE ET CÂBLE DE PUISSANCE LE COMPRENANT

(30) Priority: 21.01.2014 WO PCT/EP2014/051145
(43) Date of publication of application: 30.11.2016
(73) Proprietor: NKT HV Cables AB, 371 60 Lyckeby (SE)
(72) Inventor: LEÓN-GUARENA, Armando, 217 46 Malmö (SE); TYRBERG, Andreas, 371 62 Lyckeby (SE); JOHANSSON, Lisa, 372 92 Kallinge (SE)
(74) Representative: Kransell & Wennborg KB
(86) International application number: PCT/EP2014/057109
(87) International publication number: WO 2015/110182

(56) References cited:
- SE-C2- 530 277
- US-A1- 2010 122 844
- US-A1- 2012 205 137

## Description

### TECHNICAL FIELD

The present disclosure generally relates to power cables. In particular it relates to a power cable filler device adapted to bear against a first power core and a second power core in a power cable, and to a power cable comprising such a power cable filler device.

### BACKGROUND

For three core high voltage cables, plastic fillers are traditionally introduced in between the cores during assembly. The fillers are designed to fit properly between the cores and to achieve an overall circular shape of the entire cable cross section. Normally, fillers are designed primarily to keep the power cable's roundness and for holding optical fibres.

An example of a filler is disclosed in SE 530 277 C2. This document discloses a power cable including three cores that are twinned with each other and arranged within a common external sheath. The power cable also comprises filler elements, each filler element being arranged in a respective space between the two cores and the external sheath. The filler elements have a profiled hollow body.

A power cable that is to be installed on the seabed is laid by special vessels that transport the power cable. The power cable may be wound on a large drum on the vessel during transport. During installation the power cable is wound off the drum, and the power cable may be fed onto a tower from which it is lowered into the sea. In order to be able to control the rate at which the power cable is lowered into the sea, tensioners on the tower are arranged to provide a suitable radial pressure to the power cable. The radial pressure applied to the power cable may be considerable, in order to hold the weight of a power cable extending down to the sea floor.

In case the power cable of SE 530 277 C2 would be installed in ultra deep-water, i.e. at depths starting at 1500 m, the filler walls may collapse during installation due to the large radial forces from tensioners. As a consequence, the optical fibre can be damaged and large local deformation may also occur on the cores due to excessive local contact forces with the filler ends. Irregular deformations on a core's insulation could affect the electrical field distribution around its cross section.

### SUMMARY

In view of the above, an object of the present disclosure is to provide a power cable filler device which is capable to withstand the large radial forces from tensioners associated with ultra deep-water installation.

Hence, according to a first aspect of the present disclosure there is provided a power cable filler device adapted to bear against a first power core and a second power core in a power cable, wherein the power cable filler device comprises: a first arced wall which defines a portion of a first circle having a first diameter, a second arced wall and a third arced wall, each defining a portion of a second circle having a second diameter which is smaller than the first diameter, which first arced wall has a first end connected to a first end of the second arced wall, and which first arced wall has a second end connected to a first end of the third arced wall, wherein the second arced wall has a second end and the third arced wall has a second end adjacent each other and defining a slit, whereby a chamber is formed between the first arced wall, the second arced wall and the third arced wall, a first partitioning wall in the chamber, extending between the first arced wall and the second arced wall, and a second partitioning wall in the chamber, extending between the first arced wall and the third arced wall, wherein the first partitioning wall extends in a first radial direction along its entire extension from the first arced wall to the second arced wall, and wherein the second partitioning wall extends in a second radial direction along its entire extension from the first arced wall to the third arced wall, which first radial direction and second radial direction are defined with respect to the radius of the first arced wall.

By providing a first partitioning wall and a second partitioning wall that extend in radial directions in the chamber, the power cable filler device, especially the partitioning walls, is able to withstand radial forces involved in lowering a power cable comprising the power cable filler device to water depths that have not been previously been possible.

According to one embodiment the first partitioning wall and the second partitioning wall are arranged at equal distance from the slit. Equal force distribution between the first partitioning wall and the second partitioning wall may thereby be obtained.

According to one embodiment the distance from the tip of the first end of the first arced wall to a point on the second circle defined by the second arced wall where the first circle tangents the second circle defined by the second arced wall is less than 0.6 times the radius of the second arced wall. By providing a first arced wall that has lateral extension of this magnitude, the local deformation between the power cable filler device ends and the power cores of a power cable may thereby be reduced because the force becomes more evenly distributed in this area.

According to one embodiment the distance from the tip of the second end of the first arced wall to a point on the second circle defined by the third arced wall where the first circle tangents the second circle defined by the third arced wall is less than 0.6 times the radius of the second arced wall.

One embodiment comprises a third partitioning wall in the chamber, which third partitioning wall extends between the first arced wall and the second arced wall.

According to one embodiment the third partitioning wall extends in a third radial direction along its entire extension from the first arced wall to the second arced wall, the third radial direction being defined with respect to the radius of the first arced wall.

One embodiment comprises a fourth partitioning wall in the chamber, which fourth partitioning wall extends between the first arced wall and the third arced wall.

By providing additional partitioning walls, the mechanical withstand strength of the power cable filler device may be further increased, especially concerning radial forces.

According to one embodiment the fourth partitioning wall extends in a fourth radial direction along its entire extension from the first arced wall to the third arced wall, the fourth radial direction being defined with respect to the radius of the first arced wall.

According to one embodiment the third partitioning wall and the fourth partitioning wall are arranged at an equal distance from the slit, and wherein the first partitioning wall, the second partitioning wall, the third partitioning wall and the fourth partitioning wall are evenly distributed in the chamber.

According to one embodiment the second end of the second arced wall bears against the second end of the third arced wall. By having a very narrow slit, the power cable filler device is able to extend further between two adjacent power cores. Thereby the second arced wall and the third arced wall will have larger surface areas, able to take and distribute forces between two adjacent power cores such that local deformation between cable cores may be reduced.

According to one embodiment the power cable filler device has a constant cross-sectional geometry along its entire length.

One embodiment comprises medium density polyethylene.

According to a second aspect of the present disclosure there is provided a power cable comprising: an external sheath, a first power core, a second power core, and a third power core, arranged within the external sheath, and three power cable filler devices according to the first aspect presented herein, wherein a first power cable filler device is arranged between the external sheath, the first power core and the second power core, a second power cable filler device is arranged between the external sheath, the second power core and the third power core, and a third power cable filler device is arranged between the external sheath, the first power core and the third power core.

According to one embodiment the power cable is a subsea power cable.

According to one embodiment the power cable is a high voltage power cable.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Figs 1 and 2a depict a cross-section of an example of a power cable filler device;
Fig. 2b shows a detailed view of a lateral portion of the power cable filler device in Fig. 2a;
Fig. 2c shows a detailed view of the adjacent second ends of the second arced wall and the third arced wall of the power cable filler device in Fig. 2a; and
Fig. 3 depicts a cross-section of a power cable comprising several power cable filler devices of the type shown in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

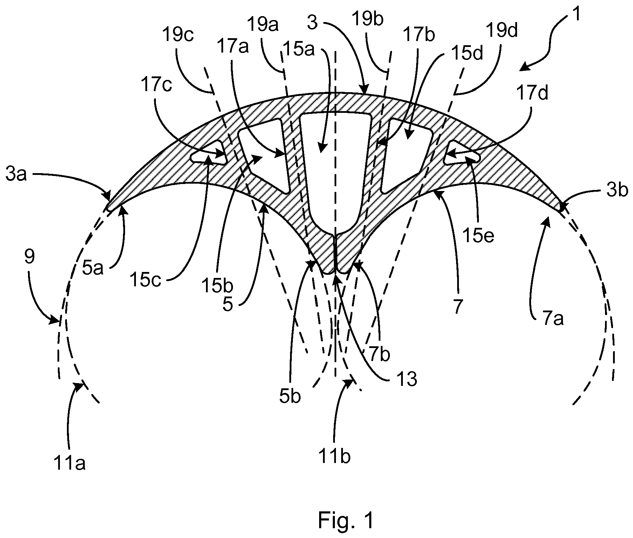

Fig. 1 shows a cross sectional view of an example of a power cable filler device 1. In a typical variation, the cross-sectional geometry of the power cable filler device 1 is constant along its entire longitudinal extension. The power cable filler device 1 is adapted to be arranged within a power cable having three twinned power cores, in the space formed between two power cores and the external sheath of the power cable.

The power cable filler device 1 comprises a first arced wall 3, a second arced wall 5 and a third arced wall 7. The first arced wall 3, the second arced wall 5 and the third arced wall 7 define the external surfaces of the power cable filler device 1.

The first arced wall 3 defines a portion of a first circle 9 having a first diameter. The second arced wall 5 and the third arced wall 7 each define a portion of a respective second circle 11a, 11b. Each of these second circles 11a, 11b has a second diameter which is smaller than the first diameter. It may be mentioned that these circles are all purely imaginary and only discussed in order to be able to define the curvature sizes and shapes of the arced walls 3, 5 and 7.

The first arced wall 3 has a first end 3a defining a lateral end of the first arced wall 3. The first arced wall 3 has a second end 3b defining the opposite lateral end of the first arced wall 3. The second arced wall 5 has a first end 5a and a second end 5b. The third arced wall 7 has a first end 7a and a second end 7b.

The first end 3a of the first arced wall 3 is connected to the first end 5a of the second arced wall 5. The second end 3b of the first arced wall 3 is connected to the first end 7a of the third arced wall 7. The second end 5b of the second arced wall 5 is arranged adjacent to the second end 7b of the third arced wall 7. The second end 5b of the second arced wall 5 and the second end 7b of the third arced wall 7 define a slit 13. The first arced wall 3, the second arced wall 5 and the third arced wall 7 thereby define the outer walls of a chamber, which chamber is subdivided into a plurality of smaller chambers 15a-15e by means of partitioning walls which will be described below. A central chamber 15a is open because the slit 13 forms a channel which connects the central chamber 15a with the exterior of the power cable filler device 1.

The power cable filler device 1 may be flexible to enable widening of the slit 13 for fitting an optical fibre cable within the central chamber 15a. The power cable filler device 1 may therefore for example comprise medium density polyethylene or any other suitable flexible material which also has high mechanical strength.

According to one example, the second end 5b of the second arced wall 5 bears against the second end 7b of the third arced wall 7. Alternatively, the second end of the second arced wall and the third arced wall may be are arranged adjacent to each other but spaced apart, for example by a distance in the range 0.5-3 mm, or the distance may be larger than that.

The power cable filler device 1 further comprises a first partitioning wall 17a extending between the first arced wall 3 and the second arced wall 5, and a second partitioning wall 17b extending between the first arced wall 3 and the third arced wall 7.

The first partitioning wall 17a extends in a first radial direction 19a along its entire extension between the first arced wall 3 and the second arced wall 5. The first partitioning wall 17a is hence straight. The second partitioning wall 17b extends in a second radial direction 19b along its entire extension between the first arced wall 3 and the third arced wall 7. The second partitioning wall 17b is hence straight.

The first radial direction 19a and the second radial direction 19b are defined with respect to the radius of the first arced wall 3. The first partitioning wall 17a and the second partitioning wall 17b are hence extending towards the centre of the first circle 9. In particular, the first partitioning wall 17a and the second partitioning wall 17b each defines a plane that intersects the centre of the first circle 9.

The first partitioning wall 17a and the second partitioning wall 17b are preferably arranged at an equal distance from the slit 13, at a respective side thereof.

According to the example shown in Fig. 1, the power cable filler device 1 comprises a third partitioning wall 17c and a fourth partitioning wall 17d. The third partitioning wall 17c extends between the first arced wall 3 and the second arced wall 5, and the fourth partitioning wall 17d extends between the first arced wall 3 and the third arced wall 7.

The third partitioning wall 17c extends in a third radial direction 19c along its entire extension between the first arced wall 3 and the second arced wall 5. The third partitioning wall 17c is hence straight. The fourth partitioning wall 17d extends in a fourth radial direction 19d along its entire extension between the first arced wall 3 and the third arced wall 7. The fourth partitioning wall 17d is hence straight.

The third radial direction 19c and the fourth radial direction 19d are defined with respect to the radius of the first arced wall 3. The third partitioning wall 17c and the fourth partitioning wall 17d are hence extending towards the centre of the first circle 9. In particular, the third partitioning wall 17c and the fourth partitioning wall 17d each defines a plane that intersects the centre of the first circle 9.

It should be noted that variations of the power cable filler device 1 may comprise fewer than four partitioning walls, i.e. two partitioning walls, namely the first partitioning wall and the second partitioning wall, or more than four partitioning walls. Preferably, the distribution of partitioning walls is even with respect to the slit so that there is an equal amount of partitioning walls at each side of the slit.

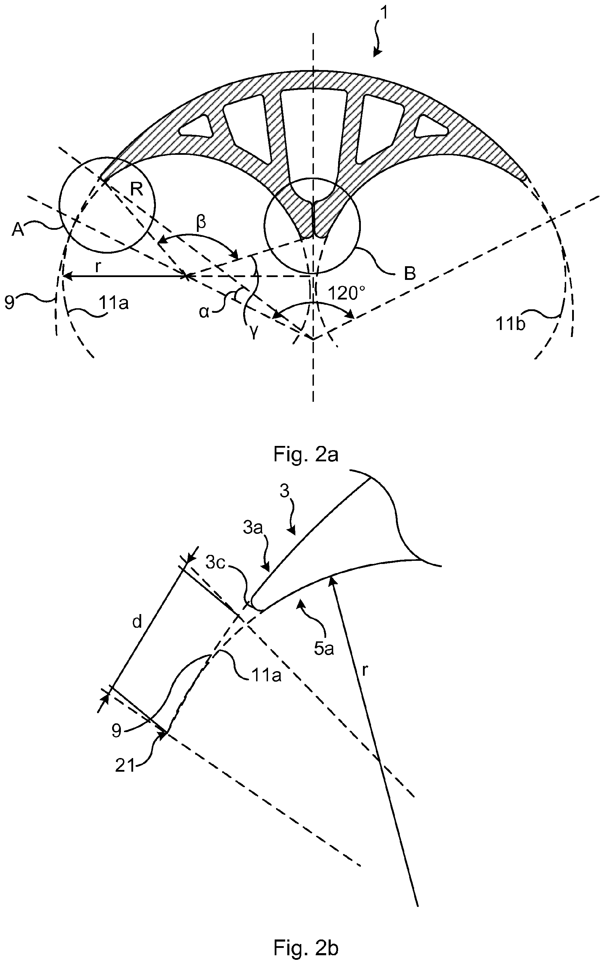

Fig. 2b depicts a detail A of the power cable filler device 1 shown in Fig. 2a. In particular, the first end 3a of the first arced wall 3 is shown. The second end 3b is identical in structure to the first end 3a, and will therefore not be described herein. The amount of lateral extension of the first end 3a and the second end 3b of the first arced wall 3 will be characterised with reference to Figs 2a-b. The first end 3a and the second end 3b each has a tip, as shown by tip 3c of the first end 3a. There is a point 21 where the first circle 9 and the second circle 11a defined by the second arced wall 5 are parallel, i.e. a point where the first circle 9 tangents the second circle 11a defined by the second arced wall 5. A distance d from the tip 3c to the point 21 is less than 0.6 times the radius r of the second circle 11a, preferable less than 0.57 times the radius r of the second circle 11a, i.e. the radius of the second arced wall 5. In other words, the arc angle α with respect to the first circle 9 between the tip 3c and the point 21 should be less than 15°. The arc angle should be as small as possible, ideally 0°, but from a production perspective it would currently not be realistic to produce such a sharp tip along the entire longitudinal extension of the power cable filler device 1. As noted above, the same applies analogously also to the second end 3b. This means that the lateral sides, i.e. the first end 3a and the second end 3b extend further than in the prior art, and bear against larger portions of a respective power core. Thereby, local deformation between the first end 3a and the power core of a power cable, and local deformation between the second end 3b and the power core of a power cable may be reduced.

An alternative manner to characterise the lateral extension of the first end 3a and the second end 3b is that the extension of the first arced wall 3 from the tip of the first end 3a to the tip of the second end 3b should be at least 75% of an arc length of the first circle 9 with an arc angle of 120°. In other words, the first arced wall 3 has an extension between its tips which at least corresponds to an angle therebetween which is 90° with respect to the first circle 9. Hence, the angle between a first line which intersects the centre of the first circle 9 and which tangents the tip of the first end 3a and a second line which intersects the centre of the first circle 9 and which tangents the tip of the second end 3b, is at least 90°.

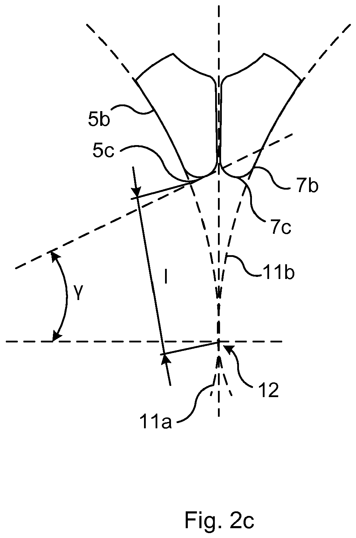

Fig. 2c shows a detail B of the power cable filler device 1 shown in Fig. 2a. The detail B includes the second end 5b of the second arced wall 5 adjacent the second end 7b of the third arced wall 7. Each of the second ends 5b, 7b has a respective tip 5c and 7c. A distance 1 from each tip 5c, 7c to a point 12 where the second circle 11a defined by the second arced wall 5 and the second circle 11b defined by the third arced wall 7 meet and tangent each other is preferable less than 0.6 times the radius r of either of the two second circles 11a, 11b. Preferably, the distance 1 is less than 0.57 times the radius r. The latter implies that with respect to a second circle 11a, 11b, the angle γ between a tip 5c, 7c of an arced wall 5, 7 associated with that second circle 11a, 11b and the point 12 is less than 30°. Furthermore, an angle β between for example the tip 3c of the first arced wall 3 and the tip 5c of the second end 5b of the second arced wall 5, as defined in the second circle 11a, should be greater than 90°. This of course also applies to the corresponding angle between the other tip of the first arced wall 3 and the tip 7c of the second end 7b of the third arced wall 7. Ideally, of course, the second ends 5b and 7b would extend the entire way to the point 12, wherein the tips 5c and 7c would be located at the point 12, but from a production perspective it would not be realistic to manufacture such second ends 5b and 7b along the entire power cable filler device 1.

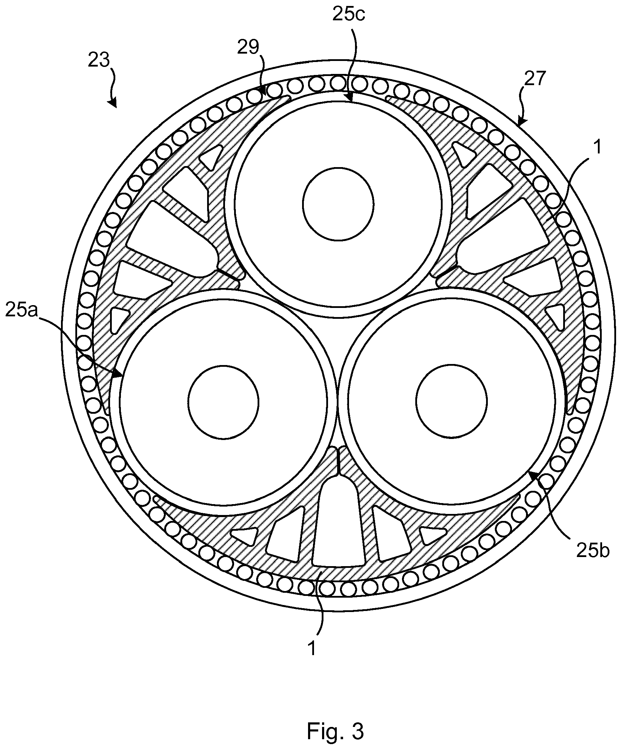

Fig. 3 shows a cross-section of an example of a power cable 23 comprising a number of power cores 25a, 25b, 25c. The power cable 23 comprises an external sheath 27, an armour layer 29, power cable filler devices 1, and a first power core 25a, a second power core 25b and a third power core 25c. Each power cable filler device 1 is arranged between two power cores 25a-25c, and the external sheath 27. It should be noted that according to variations of the power cable 23, there could be additional armour layers 29, or the power cable could be without armour layers.

The power cores 25a-25c are twinned along the length of the power cable 23. The power cable filler devices 1 are twisted as they extend longitudinally, due to the twinning of the power cores 25a-25c. The external sheath 27 and the armour layer 29 enclose the power cores 25a-25c and the power cable filler devices 1.

The power cable 23 may for example be a subsea power cable, in particular a high voltage subsea power cable. It is envisaged that power cable filler device and the power cable presented herein may be utilised in subsea applications such as subsea power transmission or subsea power distribution. The power cable and power cable filler device are especially suitable for use in ultra deep-water, although they could of course also be used at smaller depths.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A power cable filler device (1) adapted to bear against a first power core (25a) and a second power core (25b) in a power cable (23), wherein the power cable filler device (1) comprises:
a first arced wall (3) which defines a portion of a first circle (9) having a first diameter,
a second arced wall (5) and a third arced wall (7), each defining a portion of a second circle (11a, 11b) having a second diameter which is smaller than the first diameter, which first arced wall (3) has a first end (3a) connected to a first end (5a) of the second arced wall (5), and which first arced wall (3) has a second end (3b) connected to a first end (7a) of the third arced wall (7), wherein the second arced wall (5) has a second end (5b) and the third arced wall (7) has a second end (7b) adjacent each other and defining a slit (13), whereby a chamber is formed between the first arced wall (3), the second arced wall (5) and the third arced wall (7),
a first partitioning wall (17a) in the chamber, extending between the first arced wall (3) and the second arced wall (5), and
a second partitioning wall (17b) in the chamber, extending between the first arced wall (3) and the third arced wall (7),
**characterised in that** the first partitioning wall (17a) extends in a first radial direction (19a) along its entire extension from the first arced wall (3) to the second arced wall (5), and **in that** the second partitioning wall (17b) extends in a second radial direction (19b) along its entire extension from the first arced wall (3) to the third arced wall (7), which first radial direction (19a) and second radial direction (19b) are defined with respect to the radius of the first arced wall (3).

2. The power cable filler device (1) as claimed in claim 1, wherein the first partitioning wall (17a) and the second partitioning wall (17b) are arranged at equal distance from the slit (13).

3. The power cable filler device (1) as claimed in any of the preceding claims, wherein the distance (d) from the tip (3c) of the first end (3a) of the first arced wall (3) to a point (21) on the second circle (11a) defined by the second arced wall (5) where the first circle (9) tangents the second circle (11a) defined by the second arced wall (5) is less than 0.6 times the radius of the second arced wall (5).

4. The power cable filler device (1) as claimed in any of the preceding claims, wherein the distance from the tip of the second end of the first arced wall (3) to a point on the second circle (11b) defined by the third arced wall (7) where the first circle (9) tangents the second circle (11b) defined by the third arced wall (7) is less than 0.6 times the radius of the third arced wall (7).

5. The power cable filler device (1) as claimed in any of the preceding claims, comprising a third partitioning wall (17c) in the chamber, which third partitioning wall (17c) extends between the first arced wall (3) and the second arced wall (5).

6. The power cable filler device (1) as claimed in claim 5, wherein the third partitioning wall (17c) extends in a third radial direction (19c) along its entire extension from the first arced wall (3) to the second arced wall (5), the third radial direction (19c) being defined with respect to the radius of the first arced wall (3).

7. The power cable filler device (1) as claimed in any of the preceding claims, comprising a fourth partitioning wall (17d) in the chamber, which fourth partitioning wall (17d) extends between the first arced wall (3) and the third arced wall (7).

8. The power cable filler device (1) as claimed in claim 7, wherein the fourth partitioning wall (17d) extends in a fourth radial direction (19d) along its entire extension from the first arced wall (3) to the third arced wall (7), the fourth radial direction (19d) being defined with respect to the radius of the first arced wall (3).

9. The power cable filler device (1) as claimed in claim 7 or 8, wherein the third partitioning wall (17c) and the fourth partitioning wall (17d) are arranged at an equal distance from the slit (13), and wherein the first partitioning wall (17a), the second partitioning wall (17b), the third partitioning wall (17c) and the fourth partitioning (17d) wall are evenly distributed in the chamber.

10. The power cable filler device (1) as claimed in any of the preceding claims, wherein the second end (5b) of the second arced wall (5) bears against the second end (7b) of the third arced wall (7).

11. The power cable filler device (1) as claimed in any of the preceding claims, wherein the power cable filler device (1) has a constant cross-sectional geometry along its entire length.

12. The power cable filler device (1) as claimed in any of the preceding claims, comprising medium density polyethylene.

13. A power cable (23) comprising:
an external sheath (27),
a first power core (25a), a second power core (25b), and a third power core (25c), arranged within the external sheath (27), and
three power cable filler devices (1) as claimed in any of claims 1-12, wherein a first power cable filler device (1) is arranged between the external sheath (27), the first power core (25a) and the second power core (25b), a second power cable filler device (1) is arranged between the external sheath (27), the second power core (25b) and the third power core (25c), and a third power cable filler device (1) is arranged between the external sheath (27), the first power core (25a) and the third power core (25c).

14. The power cable (23) as claimed in claim 13, wherein the power cable (23) is a subsea power cable.

15. The power cable (23) as claimed in claim 13 or 14, wherein the power cable (23) is a high voltage power cable.

## Patentansprüche

1. Hauptstromleitungsfüllervorrichtung (1), die so ausgelegt ist, dass sie in einer Hauptstromleitung (23) gegen einen ersten Hauptstromleitungskern (25a) und einen zweiten Hauptstromleitungskern (25b) anliegt, wobei die Hauptstromleitungsfüllervorrichtung (1) umfasst:
eine erste gewölbte Wand (3), die einen Abschnitt eines ersten Kreises (9) mit einem ersten Durchmesser definiert,
eine zweite gewölbte Wand (5) und eine dritte gewölbte Wand (7), die jeweils einen Abschnitt eines zweiten Kreises (1a, 11b) mit einem zweiten Durchmesser definieren, der kleiner als der erste Durchmesser ist, wobei die erste gewölbte Wand (3) ein erstes Ende (3a) aufweist, das mit einem ersten Ende (5a) der zweiten gewölbten Wand (5) verbunden ist, und wobei die erste gewölbte Wand (3) ein zweites Ende (3b) aufweist, das mit einem ersten Ende (7a) der dritten gewölbten Wand (7) verbunden ist, wobei die zweite gewölbte Wand (5) ein zweites Ende (5b) aufweist und die dritte gewölbte Wand (7) ein zweites Ende (7b) aufweist, die aneinander angrenzen und einen Schlitz (13) definieren, wobei zwischen der ersten gewölbten Wand (3), der zweiten gewölbten Wand (5) und der dritten gewölbten Wand (7) eine Kammer gebildet ist,
eine erste Trennwand (17a) in der Kammer, die sich zwischen der ersten gewölbten Wand (3) und der zweiten gewölbten Wand (5) erstreckt, und
eine zweite Trennwand (17b) in der Kammer, die sich zwischen der ersten gewölbten Wand (3) und der dritten gewölbten Wand (7) erstreckt,
**dadurch gekennzeichnet, dass**
die erste Trennwand (17a) sich in einer ersten radialen Richtung (19a) entlang ihrer gesamten Ausdehnung von der ersten gewölbten Wand (3) zu der zweiten gewölbten Wand (5) erstreckt, und dass
die zweite Trennwand (17b) sich in einer zweiten radialen Richtung (19b) entlang ihrer gesamten Ausdehnung von der ersten gewölbten Wand (3) bis zu der dritten gewölbten Wand (7) erstreckt, wobei die erste radiale Richtung (19a) und die zweite radiale Richtung (19b) in Bezug auf den Radius der ersten gewölbten Wand (3) definiert sind.

2. Hauptstromleitungsfüllervorrichtung (1) nach Anspruch 1, wobei die erste Trennwand (17a) und die zweite Trennwand (17b) mit gleichem Abstand von dem Schlitz (13) angeordnet sind.

3. Hauptstromleitungsfüllervorrichtung (1) nach einem der vorhergehenden Ansprüche, wobei der Abstand (d) von der Spitze (3c) des ersten Endes (3a) der ersten gewölbten Wand (3) zu einem Punkt (21) auf dem zweiten Kreis (11a), der durch die zweite gewölbte Wand (5) definiert ist, an der Stelle, wo der erste Kreis (9) den zweiten Kreis (11a), der durch die zweite gewölbte Wand (5) definiert ist, tangiert, kleiner als das 0,6-fache des Radius der zweiten gewölbten Wand (5) ist.

4. Hauptstromleitungsfüllervorrichtung (1) nach einem der vorhergehenden Ansprüche, wobei der Abstand von der Spitze des zweiten Endes der ersten gewölbten Wand (3) zu einem Punkt auf dem zweiten Kreis (11b), der durch die dritte gewölbte Wand (7) definiert ist, an der Stelle, wo der erste Kreis (9) den zweiten Kreis (11b), der durch die dritte gewölbte Wand (7) definiert ist, tangiert, kleiner als das 0,6-fache des Radius der dritten gewölbten Wand (7) ist.

5. Hauptstromleitungsfüllervorrichtung (1) nach einem der vorhergehenden Ansprüche, eine dritte Trennwand (17c) in der Kammer umfassend, wobei sich die dritte Trennwand (17c) zwischen der ersten gewölbten Wand (3) und der zweiten gewölbten Wand (5) erstreckt.

6. Hauptstromleitungsfüllervorrichtung (1) nach Anspruch 5, wobei sich die dritte Trennwand (17c) in einer dritten radialen Richtung (19c) entlang ihrer gesamten Ausdehnung von der ersten gewölbten Wand (3) zu der zweiten gewölbten Wand (5) erstreckt, wobei die dritte radiale Richtung (19c) in Bezug auf den Radius der ersten gewölbten Wand (3) definiert ist.

7. Hauptstromleitungsfüllervorrichtung (1) nach einem der vorhergehenden Ansprüche, eine vierte Trennwand (17d) in der Kammer umfassend, wobei sich die vierte Trennwand (17d) zwischen der ersten gewölbten Wand (3) und der dritten gewölbten Wand (7) erstreckt.

8. Hauptstromleitungsfüllervorrichtung (1) nach Anspruch 7, wobei sich die vierte Trennwand (17d) in einer vierten radialen Richtung (19d) entlang ihrer gesamten Ausdehnung von der ersten gewölbten Wand (3) zu der dritten gewölbten Wand (7) erstreckt, wobei die vierte radiale Richtung (19d) in Bezug auf den Radius der ersten gewölbten Wand (3) definiert ist.

9. Hauptstromleitungsfüllervorrichtung (1) nach Anspruch 7 oder 8, wobei die dritte Trennwand (17c) und die vierte Trennwand (17d) mit gleichem Abstand von dem Schlitz (13) angeordnet sind, und wobei die erste Trennwand (17a), die zweite Trennwand (17b), die dritte Trennwand (17c) und die vierte Trennwand (17d) in der Kammer gleichmäßig verteilt sind.

10. Hauptstromleitungsfüllervorrichtung (1) nach einem der vorhergehenden Ansprüche, wobei das zweite Ende (5b) der zweiten gewölbten Wand (5) gegen das zweite Ende (7b) der dritten gewölbten Wand (7) anliegt.

11. Hauptstromleitungsfüllervorrichtung (1) nach einem der vorhergehenden Ansprüche, wobei die Hauptstromleitungsfüllervorrichtung (1) über ihre gesamte Länge eine konstante Querschnittsgeometrie aufweist.

12. Hauptstromleitungsfüllervorrichtung (1) nach einem der vorhergehenden Ansprüche, ein Polyethylen mittlerer Dichte umfassend.

13. Hauptstromleitung (23), umfassend:
einen äußeren Mantel (27),
einen ersten Hauptstromleitungskern (25a), einen zweiten Hauptstromleitungskern (25b) und einen dritten Hauptstromleitungskern (25c), die innerhalb des äußeren Mantels (27) angeordnet sind, und
drei Hauptstromleitungsfüllervorrichtungen (1) nach einem der Ansprüche 1-12, wobei eine erste Hauptstromleitungsfüllervorrichtung (1) zwischen dem äußeren Mantel (27), dem ersten Hauptstromleitungskern (25a) und dem zweiten Hauptstromleitungskern (25b) angeordnet ist, eine zweite Hauptstromleitungsfüllervorrichtung (1) zwischen dem äußeren Mantel (27), dem zweiten Hauptstromleitungskern (25b) und dem dritten Hauptstromleitungskern (25c) angeordnet ist, und eine dritte Hauptstromleitungsfüllervorrichtung (1) zwischen dem äußeren Mantel (27), dem ersten Hauptstromleitungskern (25a) und dem dritten Hauptstromleitungskern (25c) angeordnet ist.

14. Hauptstromleitung (23) nach Anspruch 13, wobei die Hauptstromleitung (23) eine Unterwasserhauptstromleitung ist.

15. Hauptstromleitung (23) nach Anspruch 13 oder 14, wobei die Hauptstromleitung (23) eine Hochspannungsleitung ist.

## Revendications

1. Dispositif à matériau de remplissage pour câble d'alimentation (1) adapté pour s'appuyer contre une première âme d'alimentation (25a) et une deuxième âme d'alimentation (25b) dans un câble d'alimentation (23), dans lequel le dispositif à matériau de remplissage pour câble d'alimentation (1) comprend :
une première paroi arquée (3) qui définit une portion d'un premier cercle (9) présentant un premier diamètre,
une deuxième paroi arquée (5) et une troisième paroi arquée (7) qui définissent chacune une portion d'un deuxième cercle (11a, 11b) présentant un deuxième diamètre inférieur au premier diamètre, ladite première paroi arquée (3) comportant une première extrémité (3a) connectée à une première extrémité (5a) de la deuxième paroi arquée (5), la première paroi arquée (3) comportant une deuxième extrémité (3b) connectée à une première extrémité (7a) de la troisième paroi arquée (7), dans lequel la deuxième paroi arquée (5) comporte une deuxième extrémité (5b) et la troisième paroi arquée (7) comporte une deuxième extrémité (7b) adjacentes entre elles et définissant une rainure (13), moyennant quoi une chambre est formée entre la première paroi arquée (3), la deuxième paroi arquée (5) et la troisième paroi arquée (7),
une première paroi de séparation (17a) dans la chambre, qui s'étend entre la première paroi arquée (3) et la deuxième paroi arquée (5), et
une deuxième paroi de séparation (17b) dans la chambre, qui s'étend entre la première paroi arquée (3) et la troisième paroi arquée (7),
**caractérisé en ce que** la première paroi de séparation (17a) s'étend dans une première direction radiale (19a) sur toute son extension depuis la première paroi arquée (3) jusqu'à la deuxième paroi arquée (5), et **en ce que** la deuxième paroi de séparation (17b) s'étend dans une deuxième direction radiale (19b) sur toute son extension depuis la première paroi arquée (3) jusqu'à la troisième paroi arquée (7), lesdites première direction radiale (19a) et deuxième direction radiale (19b) étant définies par rapport au rayon de la première paroi arquée (3).

2. Dispositif à matériau de remplissage pour câble d'alimentation (1) selon la revendication 1, dans lequel la première paroi de séparation (17a) et la deuxième paroi de séparation (17b) sont agencées à distance égale de la rainure (13).

3. Dispositif à matériau de remplissage pour câble d'alimentation (1) selon l'une quelconque des revendications précédentes, dans lequel la distance (d) depuis la pointe (3c) de la première extrémité (3a) de la première paroi arquée (3) jusqu'à un point (21) sur le deuxième cercle (11a) défini par la deuxième paroi arquée (5) où le premier cercle (9) est tangent au deuxième cercle (11a) défini par la deuxième paroi arquée (5) est inférieure à 0,6 fois le rayon de la deuxième paroi arquée (5).

4. Dispositif à matériau de remplissage pour câble d'alimentation (1) selon l'une quelconque des revendications précédentes, dans lequel la distance depuis la pointe de la deuxième extrémité de la première paroi arquée (3) jusqu'à un point sur le deuxième cercle (11b) défini par la troisième paroi arquée (7) où le premier cercle (9) est tangent au deuxième cercle (11b) défini par la troisième paroi arquée (7) est inférieure à 0,6 fois le rayon de la troisième paroi arquée (7).

5. Dispositif à matériau de remplissage pour câble d'alimentation (1) selon l'une quelconque des revendications précédentes, comprenant une troisième paroi de séparation (17c) dans la chambre, ladite troisième paroi de séparation (17c) s'étendant entre la première paroi arquée (3) et la deuxième paroi arquée (5).

6. Dispositif à matériau de remplissage pour câble d'alimentation (1) selon la revendication 5, dans lequel la troisième paroi de séparation (17c) s'étend dans une troisième direction radiale (19c) sur toute son extension depuis la première paroi arquée (3) jusqu'à la deuxième paroi arquée (5), la troisième direction radiale (19c) étant définie par rapport au rayon de la première paroi arquée (3).

7. Dispositif à matériau de remplissage pour câble d'alimentation (1) selon l'une quelconque des revendications précédentes, comprenant une quatrième paroi de séparation (17d) dans la chambre, ladite quatrième paroi de séparation (17d) s'étendant entre la première paroi arquée (3) et la troisième paroi arquée (7).

8. Dispositif à matériau de remplissage pour câble d'alimentation (1) selon la revendication 7, dans lequel la quatrième paroi de séparation (17d) s'étend dans une quatrième direction radiale (19d) sur toute son extension depuis la première paroi arquée (3) jusqu'à la troisième paroi arquée (7), la quatrième direction radiale (19d) étant définie par rapport au rayon de la première paroi arquée (3).

9. Dispositif à matériau de remplissage pour câble d'alimentation (1) selon la revendication 7 ou 8, dans lequel la troisième paroi de séparation (17c) et la quatrième paroi de séparation (17d) sont agencées à distance égale de la rainure (13), et dans lequel la première paroi de séparation (17a), la deuxième paroi de séparation (17b), la troisième paroi de séparation (17c) et la quatrième paroi de séparation (17d) sont distribuées uniformément dans la chambre.

10. Dispositif à matériau de remplissage pour câble d'alimentation (1) selon l'une quelconque des revendications précédentes, dans lequel la deuxième extrémité (5b) de la deuxième paroi arquée (5) s'appuie contre la deuxième extrémité (7b) de la troisième paroi arquée (7).

11. Dispositif à matériau de remplissage pour câble d'alimentation (1) selon l'une quelconque des revendications précédentes, dans lequel le dispositif à matériau de remplissage pour câble d'alimentation (1) présente une section transversale à géométrie constante sur toute sa longueur.

12. Dispositif à matériau de remplissage pour câble d'alimentation (1) selon l'une quelconque des revendications précédentes, comprenant du polyéthylène moyenne densité.

13. Câble d'alimentation (23) comprenant :
une gaine externe (27),
une première âme d'alimentation (25a), une deuxième âme d'alimentation (25b) et une troisième âme d'alimentation (25c), agencées dans la gaine externe (27), et
trois dispositifs à matériau de remplissage pour câble d'alimentation (1) selon l'une quelconque des revendications 1 à 12, dans lequel un premier dispositif à matériau de remplissage pour câble d'alimentation (1) est agencé entre la gaine externe (27), la première âme d'alimentation (25a) et la deuxième âme d'alimentation (25b), un deuxième dispositif à matériau de remplissage pour câble d'alimentation (1) est agencé entre la gaine externe (27), la deuxième âme d'alimentation (25b) et la troisième âme d'alimentation (25c), et un troisième dispositif à matériau de remplissage pour câble d'alimentation (1) est agencé entre la gaine externe (27), la première âme d'alimentation (25a) et la troisième âme d'alimentation (25c).

14. Câble d'alimentation (23) selon la revendication 13, dans lequel le câble d'alimentation (23) est un câble d'alimentation sous-marin.

15. Câble d'alimentation (23) selon la revendication 13 ou 14, dans lequel le câble d'alimentation (23) est un câble d'alimentation à haute tension.
